(19) Europäisches Patentamt

European Patent Office

Office européen des brevets

(11) **EP 1 511 019 B1**

(12) **EUROPEAN PATENT SPECIFICATION**

(45) Date of publication and mention
of the grant of the patent:
**26.07.2006 Bulletin 2006/30**

(51) Int Cl.:
*G11B 7/007* (2006.01)   *G11B 7/00* (2006.01)
*G11B 27/10* (2006.01)   *G11B 27/19* (2006.01)
*G11B 27/24* (2006.01)

(21) Application number: **04300248.4**

(22) Date of filing: **29.04.2004**

(54) **Wobble demodulation for high density optical recording media**

Demodulation des Spurschwabbelns für optische Speichermedien mit hoher Speicherdichte

Démodulation de l'oscillement de piste pour un support d'enregistrement optique à haute densité

(84) Designated Contracting States:
**DE FR GB IT**

(30) Priority: **25.08.2003 EP 03019161**

(43) Date of publication of application:
**02.03.2005 Bulletin 2005/09**

(73) Proprietor: **Thomson Licensing**
**92100 Boulogne-Billancourt (FR)**

(72) Inventor: **Georgi, Marco**
**30177 Hannover (DE)**

(74) Representative: **Rittner, Karsten**
**Deutsche Thomson-Brandt GmbH,**
**European Patent Operations,**
**Karl-Wiechert-Allee 74**
**30625 Hannover (DE)**

(56) References cited:
**EP-A- 1 271 489**   **EP-A- 1 324 320**
**WO-A-03/034414**

**EP 1 511 019 B1**

**Description**

The present invention relates to a method for the demodulation of the ADIP data of a wobble signal of an optical recording medium, and to an apparatus for reading from and/or writing to optical recording media using such method.

Methods such as these are used, for example, in an apparatus for reading from and/or writing to optical recording media having wobbled tracks, in order to obtain address information from the wobbled tracks (ADIP information, address in pregroove) or to use the wobble frequency to produce a write clock.

In general, in optical recording media, which are in the form of discs and are suitable for reading from and/or writing to, the tracks are formed such that they represent an interleaved spiral or concentric circles. Especially in the case of optical recording media which are suitable for writing to, the tracks additionally are wobbled in a specific form, in order to find specific positions on the medium. This means that the track is not an approximately straight line, but a serpentine line. By way of example, the shape of this serpentine line can contain address information, which is used for identifying a specific position on this optical recording medium. Various methods are used for coding, examples of which include frequency modulation or phase modulation. Furthermore, the wobble signal may also be used for rotation speed information or for presetting a write data rate.

For high density optical recording media, it has been proposed to modulate the wobble signal using two methods in an intermixed manner: Minimum Shift Keying cosine variant (MSK-cos) and Harmonic Modulated Wave (HMW), which is also referred to as sawtooth wobble. Only some of the wobble periods are modulated. Most of the wobble periods are monotone wobbles (MW), as depicted in Fig. 1 a). The MSK-cos method is mainly adopted for the ADIP unit synchronization, and is illustrated in Fig. 2 a). The MSK mark indicates the start of the ADIP unit or is used for synchronization or data recognition. The HMW method is mainly employed for the ADIP data. The second harmonic of the fundamental wobble frequency is added to the wobble with a lower amplitude level. Its phase is in quadrature with the fundamental wobble frequency and it is bi-phase modulated according to the ADIP bit, which is illustrated in Figs. 3 and 4.

In the wobble signal of the proposed high density optical recording medium the following frequencies with different phases occur.

$$f1(t) = \cos(2 \cdot \pi \cdot f_{wob} \cdot t)$$

$$f2(t) = -\cos(2 \cdot \pi \cdot f_{wob} \cdot t) \approx -f1(t)$$

$$f3(t) = \cos(2 \cdot \pi \cdot 1.5 \cdot f_{wob} \cdot t)$$

$$f4(t) = -\cos(2 \cdot \pi \cdot 1.5 \cdot f_{wob} \cdot t) = -f3(t)$$

$$f5(t) = \cos(2\ \pi\ f_{wob} \cdot t) + 1/4 \cdot \sin(2 \cdot \pi \cdot 2 \cdot f_{wob}) \cdot t)$$

$$f6(t) = \cos(2 \cdot \pi\ f_{wob} \cdot t) - 1/4 \cdot \sin(2 \cdot \pi\ 2 \cdot f_{wob}) \cdot t)$$

As can be seen from the above list, depending on the frequency and the phase of the wobble signal different types of wobble periods are found in the wobble signal.

Since the above described modulation of the wobble signal is quite new, solutions for a reliable wobble demodulation are hardly known. Typical schemes known from prior art for frequency or phase demodulation could be used, but it is difficult to apply the proper combination of both schemes.

Minamino et al. in Jpn. J. Appl. Phys Vol. 41 (2002), pp 1741-1742, propose a new concept of addressing in optical disks using a sawtooth wobble groove. For calculating the error rate of every sawtooth wobble the steep edges of the sawtooth shape are converted to pulse signals by differential calculus.

Kobayashi et al. in Jpn. J. Appl. Phys Vol. 42 (2003), pp 915-918, propose a method for detecting the MSK marks and the HMW sawtooth wobble. A heterodyne circuit consisting of a carrier multiplier, an integrator and a sample and hold element is used for this purpose. The wobble signal is multiplied by the cosine carrier of the fundamental frequency for detecting the MSK marks in the multiplier. On the other hand it is multiplied by the sine carrier of the second harmonic frequency for detecting the HMW sawtooth wobble.

EP-A-1 271 489, EP-A-1 324 320 and WO 03/034414 disclose optical disk medium including a track groove thereon; said groove is being wobbled by different types of wobble periods but said documents are silent about the detection of the current type of wobble on the basis of an amplitude deviation. It is an object of the invention to propose an alternative method for a reliable wobble demodulation.

According to the invention, a method for the demodulation of the ADIP data of a wobble signal of an optical recording medium, whereby the wobble signal comprises different types of wobble periods, comprises the steps of

- transforming the frequency and/or phase of harmonic deviations within the wobble signal to amplitude deviations,
- detecting the amplitude deviations, and
- detecting a current type of wobble period from the detected amplitude deviations.

Frequency and/or phase of harmonic deviations are transformed into amplitude deviations, which can easily be detected. The invention is especially advantageous for f5(t) and f6(t), which are bit representations of data 1 and data 0, respectively, since in the case of HMW modulation the addition/subtraction of the harmonic wave does not lead to a change in the period of the fundamental wobble frequency. Typical wobble demodulators are, therefore, not able to detect f5(t) or f6 (7).The invention has the advantage of low implementation costs and the simple algorithm used for demodulation, which results in a low implementation time. Though the performance is not comparable to the performance of coherence based demodulation algorithms, the performance is sufficient for low-cost applications.

Since the method transforms frequency deviations in amplitude deviations, the method is susceptible to amplitude disturbance from the recording medium, e.g. fingerprints. However, these amplitude disturbance can be reduced using an automatic-gain-control (AGC).

Favorably, information about the currently used modulation is obtained from the detected types of wobble period. The types of wobble period f1(t), ... f6(t) give information about the currently used modulation:

- MSK (minimum shift keying)

- MW (monotone wobble)

- Sawtooth wobble representing a data '1' (HMW=harmonic modulated wave)

- Sawtooth wobble representing a data '0' (HMW=harmonic modulated wave)

- cannot detect (error)

With this information the type of the ADIP unit and the ADIP word structure are detected and the ADIP codeword is extracted.

Advantageously, the step of transforming the frequency and/or phase of harmonic deviations within the wobble signal to amplitude deviations comprises integrating the wobble signal using a dynamic integrate function, i.e. the integral function of the signal. This allows a very simple and efficient transformation of the frequency deviations into amplitude deviations. Other methods for transforming the frequency and/or phase of harmonic deviations within the wobble signal to amplitude deviations, such as calculating the derivative, can also be used. In general only the frequency deviations can be transformed into amplitude deviations, not the phase deviations. However, in this special case, different values are obtained depending on whether the harmonic is added or subtracted, respectively. This allows to transform also the phase deviations into amplitude deviations.

Favorably, the method further comprises the steps of

- storing the maximum and/or minimum values of the integral of the wobble within a wobble period, and
- using the stored maximum and/or minimum values as an indication of the type of wobble period.

Successive maximum and/or minimum values (only maximum or minimum or a combination of both) are a direct indication of the type of wobble period. After one wobble period the maximum and/or minimum values are favorably cleared, e.g. at zero-crossings of the integral function or at a maximum of the wobble input signal.

According to the invention, the maximum and/or minimum values are compared with value ranges for the different types of wobble periods. Though in theory specific amplitudes correspond to the maximum and minimum of a specific type of wobble period, in practice the signal comprises noise components and these values are not reached exactly. Therefore, value ranges are advantageously defined. If the value ranges are wide a detection of unknown values is prevented, however, values might be incorrectly detected. If the value ranges are small, the detection is less likely to be incorrect, however, unknown values will produce errors. In a preferred embodiment a value range without interruptions is used. Though this might lead to occasional errors, these will usually not affect the ADIP demodulation by a statemachine due to its error tolerance.

Favorably, at least one of the different types of wobble period is detected by measuring the frequency of the wobble signal. For example, $f3(t)$ and $f4(t)$ can be distinguished from $f1(t)$, $f2(t)$, $f5(t)$ and $f6(t)$ by a simple frequency detection, e.g. by measuring the time for one period or by counting samples between (e.g. positive) zero crossings. Distinguishing $f1(t)$, $f2(t)$, $f5(t)$ and $f6(t)$ in this way is not possible, since all functions have the same period length.

Advantageously, the order of maximum and minimum value in one period is determined for detecting the type of wobble period. For example, the phase of $f1(t)$ and $f3(t)$ cannot be detected by analyzing the maximum/minimum value of the integral of the wobble, because the 180 degree phase shift results in the same maximum/minimum values. To obtain the phase it is checked whether the maximum occurs before the minimum or the minimum occurs before the maximum within one wobble period. The phase is not mandatory needed, but it increase the performance.

Favorably, the method is applied to a wobble signal which is modulated using the methods of minimum shift keying (MSK) and/or harmonic modulated wave (HMW). Since such a wobble modulation has been proposed for high density optical recording media, a method capable of demodulating this type of wobble signal will become important.

Advantageously, a device for demodulating the ADIP data of a wobble signal of an optical recording medium, whereby the wobble signal comprises different types of wobble periods, performs a method according to the invention.

Favorably, a method according to the invention is performed by an apparatus for reading from and/or writing to optical recording media for wobble demodulation. Such an apparatus has a sufficiently reliable wobble demodulation at reduced implementation cost.

For a better understanding of the invention, an exemplary embodiment is specified in the following description with reference to the figures. It is understood that the invention is not limited to this exemplary embodiment and that specified features can also expediently be combined and/or modified without departing from the scope of the present invention. In the figures:

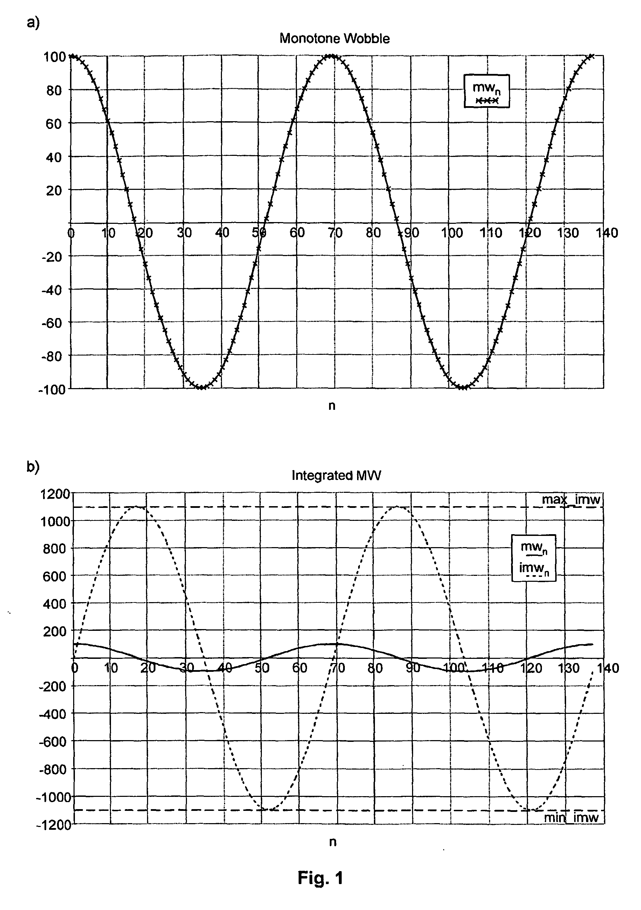

Fig. 1    shows in part a) a monotone wobble in a wobble signal and in part b) an integrated monotone wobble;

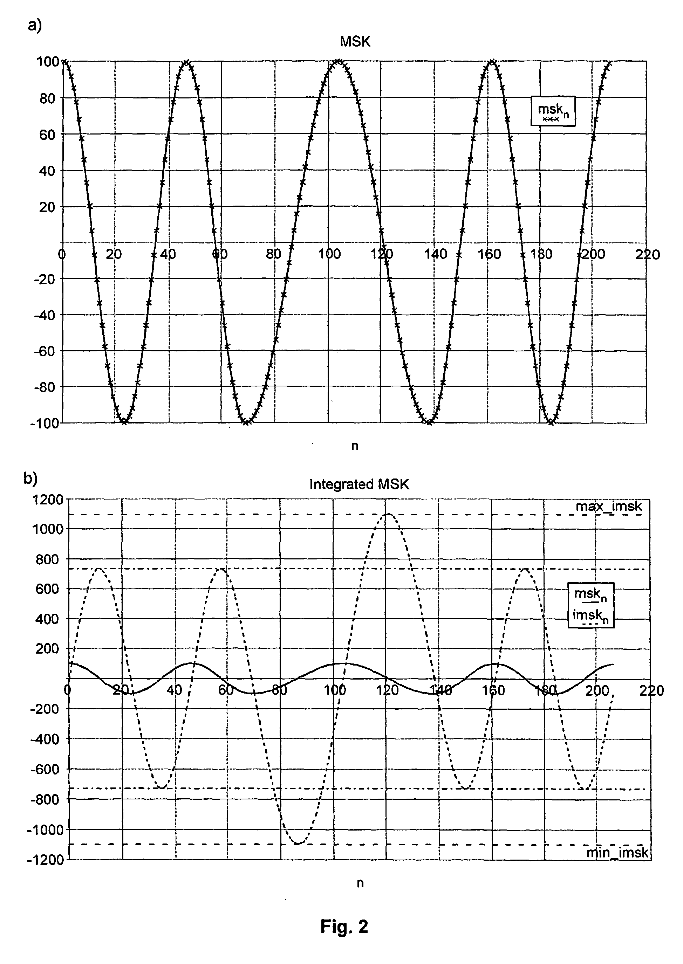

Fig. 2    shows in part a) an MSK mark in a wobble signal and in part b) an integrated MSK mark;

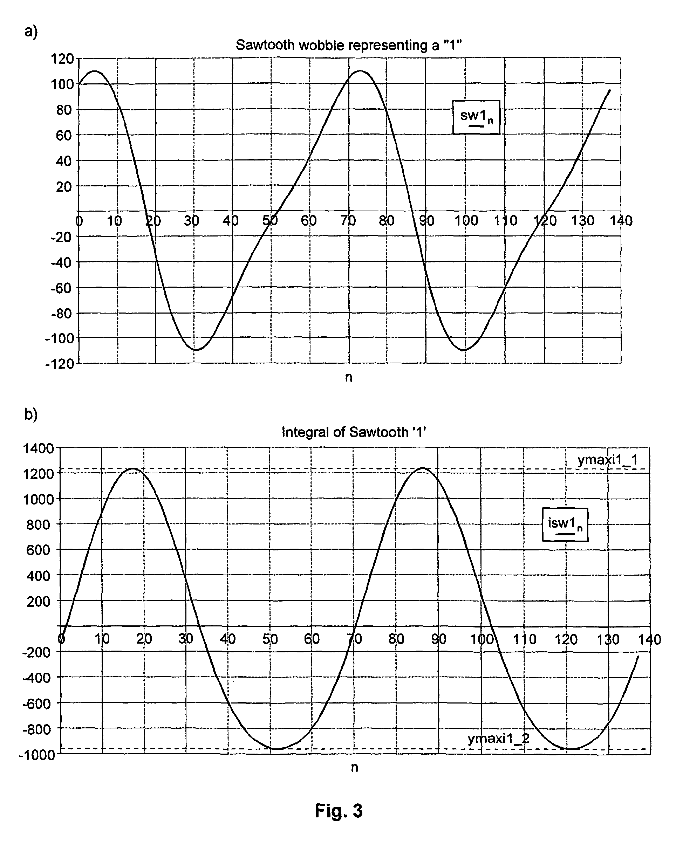

Fig. 3    shows in part a) a sawtooth wobble representing a "1" and in part b) the corresponding integrated sawtooth wobble;

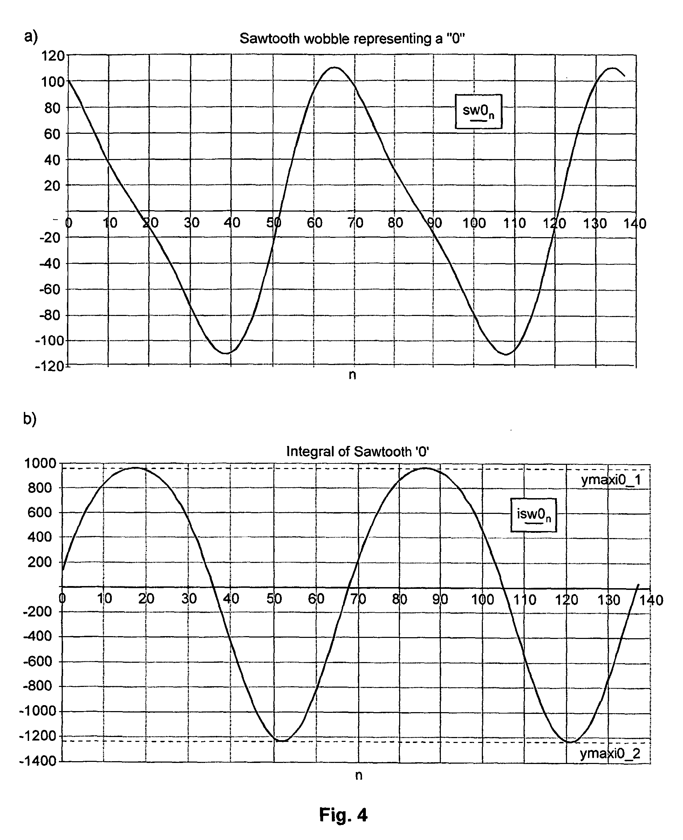

Fig. 4    shows in part a) a sawtooth wobble representing a "0" and in part b) the corresponding integrated sawtooth wobble; and

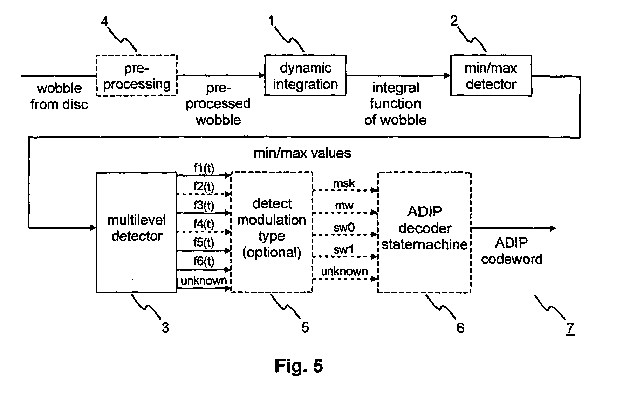

Fig. 5    shows a wobble demodulator according to the invention.

In the Figs. 1 to 4 instead of the functions $fi(t)$ the sampled functions $fi_n$ are shown. The functions were sampled at 66 MHz with a quantisation of 100, i.e. the theoretical value range of the input signal is multiplied by 100 and distributed evenly over the available sampling values.

In part a) of Fig. 1 a monotone wobble $mw_n$ in a wobble signal is shown. Part b) of the figure shows an integrated monotone wobble $imw_n$ in comparison to the monotone wobble $mw_n$ together with the corresponding maximum value max_imw and minimum value min_imw.

Fig. 2 shows in part a) an MSK mark $msk_n$ in a wobble signal and in part b) an integrated MSK mark $imsk_n$ in comparison to the MSK mark $msk_n$ together with the corresponding maximum value max_imsk and minimum value min_imsk.

A sawtooth wobble $sw1_n$ representing a "1" is shown in Fig. 3 a). The corresponding integrated sawtooth wobble $isw1_n$ together with the respective maximum value ymaxi1_1 and minimum value ymaxi1_2 is depicted in Fig. 3 b).

Similarly, a sawtooth wobble $sw0_n$ representing a "0" is shown in Fig. 4 a). The corresponding integrated sawtooth wobble $isw0_n$ together with the respective maximum value ymaxi0_1 and minimum value ymaxi0_2 is depicted in Fig. 4 b).

A wobble demodulator 7 according to the invention is depicted in Fig. 5. It mainly consists of a pre-processing block 4, an integrator 1, a minimum/maximum detector 2, a multilevel detector 3, a modulation type detector 5, and an ADIP decoder statemachine 6. The pre-processing block 4 and the modulation type detector 5 are not mandatory. The demodulator 7 receives a wobble input signal either directly from a recording medium (not shown) or from the pre-processing block 4, which performs e.g. a gain- and offset control, a pre-filtering, a sample-rate-conversion or the like.

In a first step the integral function of the input signal is calculated. This is done by the integrator 1, e.g. a simple accumulator adding all the input signal values. Since small offsets and non-ideal input signals may lead to a drift of the integral function, it is advantageous to reset the integral values from time to time, e.g. after one or more cycles. When resetting the integral at (e.g. positive) zero-crossings of the input signal, a proper reset value has to be found, since the integral value does not have a fixed value at this point. This is favorably avoided by integrating from one maximum (or minimum) to the next maximum (or minimum). This has the advantage that the integral value is always zero at a maximum (or minimum), independent of the current wobble period type. A further advantage is that the transition from one type of wobble to another type of wobble does always occur at the maximum. Therefore, the influence of transitions is minimized. A problem exists in that in MSK-Marks frequencies of 1.5 times the wobble frequency occur, i.e. an increased number of periods is found in the same time interval. This means that the three wobble periods of an MSK mark are detected as four wobble periods. Therefore, the theoretical values differ from this implementation. This, however, in general is no problem as the resulting characteristic integral maximum/minimum value allows a secure distinction from other wobble period types.

The maximum/minimum detector 2 finds maximum/minimum values in the integral function of the wobble signal in a wobble period. After one wobble period the maximum/minimum values are cleared, e.g. at zero-crossings of the integral function or at a maximum of the input wobble signal.

The multilevel detector 3 compares the obtained values with predefined values and outputs the wobble period type, i.e. f1(t) to f6(t). Of course, the invention is not limited to these exemplary functions. It is as well applicable to other frequency modulations. Exemplary maximum and minimum values corresponding to the different wobble period types are summarized in the following table. The amplitude values are multiplied with 100 and sampled at 66 MHz, which is intended to represent an 8-bit quantisation.

| wobble period type | maximum | minimum | order of max/min |
|---|---|---|---|
| f1(t) | 1098 | -1098 | maximum/minimum |
| f2(t) | 1098 | -1098 | minimum/maximum |
| f3(t) | 730 | -730 | maximum/minimum |
| f4(t) | 730 | -730 | minimum/maximum |
| f5(t) | 961 | -1232 | maximum/minimum |
| f6(t) | 1235 | -960 | maximum/minimum |

The values for f5(t) and f6(t) should be symmetric, i.e. the maximum for f5(t) and the minimum for f6(t) should have the same absolute value, as well as the minimum for f5(t) and the maximum for f6(t). Deviations result inter alia from quantisation errors. The above values are theoretical results. In practice the signal comprises noise components and the values are not reached exactly. Therefore, value ranges are advantageously defined, e.g. for the maximum of f1(t)values between 1030 and 1170 are considered valid. If the value ranges are wide a detection of unknown values is prevented, however, values might be incorrectly detected. If the value ranges are small, the detection is less likely to be incorrect, however, unknown values will produce errors. As mentioned before, in a preferred embodiment a value range without interruptions is used. An exception are the upper and lower positive and negative limits. In the above example, the smallest theoretical positive value is 730. Any positive value below 600, for example, can safely be regarded as an error. Similar rules apply for the other limits.

The types of wobble period f1(t), ... f6(t) give information about the currently used modulation:

- MSK (minimum shift keying)

- MW (monotone wobble)

- Sawtooth wobble representing a data '0' (HMW=harmonic modulated wave)

- Sawtooth wobble representing a data '1' (HMW=harmonic modulated wave)

- cannot detect (error)

With this information the type of the ADIP unit and the ADIP word structure are detected, e.g. by a statemachine 6, and the ADIP codeword is extracted. The statemachine 6 favorably is error tolerant. For example, MSK marks can only be found in specific locations in the data stream. If an MSK mark is detected at a false location, it should be ignored. If an expected MSK mark is missing, it should be added. Of course, if too many error occur, the statemachine 6 will eventually loose synchronization. In this case it has to wait for further synchronization marks in the data stream.

In order to provide a proper timing for the demodulator 7 the maxima in the input wobble are detected. The change from rising values to falling values is for example used for this purpose.

If available timing information from a PLL locked to wobble can also be used.

**Claims**

1. Method for the demodulation of the ADIP data of a wobble signal of an optical recording medium, whereby the wobble signal comprises different types of wobble periods, **comprising** the steps of

   - transforming the frequency and/or phase of harmonic deviations within the wobble signal to amplitude deviations,
   - detecting the amplitude deviations, and
   - detecting a current type of wobble period from the detected amplitude deviations.

2. Method according to claim 1, **further** comprising the step of obtaining information about the currently used modulation from the detected types of wobble period.

3. Method according to claim 1 or 2, wherein the step of transforming the frequency and/or phase of harmonic deviations within the wobble signal to amplitude deviations comprises integrating the wobble signal using a dynamic integrate function.

4. Method according to claim 3, **further** comprising the steps of

   - storing the maximum and/or minimum values of the integral of the wobble within a wobble period, and
   - using the stored maximum and/or minimum values as an indication of the type of wobble period.

5. Method according to claim 4, **further** comprising the step of comparing the maximum and/or minimum values with value ranges for the different types of wobble period.

6. Method according to one of claims 1 to 5, **further** comprising the step of detecting at least one of the different types of wobble period by a measuring the frequency of the wobble signal.

7. Method according to one of claims 1 to 6, **further** comprising the step of determining the order of maximum and minimum values for detecting the type of wobble period.

8. Method according to one of the preceding claims, wherein it is applied to a wobble signal which is modulated using the methods of minimum shift keying (MSK) and harmonic modulated wave (HMW).

9. Device for demodulating the ADIP data of a wobble signal of an optical recording medium, whereby the wobble signal comprises different types of wobble periods, wherein it performs a method according to one of claims 1 to 8.

10. Apparatus for reading from and/or writing to recording media, wherein it uses a method according to anyone of claims 1 to 8 or comprises a device according to claim 9 for wobble demodulation.

**Patentansprüche**

1. Verfahren zur Demodulation der ADIP-Daten eines Wobbelsignals eines optischen Aufzeichnungsmediums, wobei das Wobbelsignal verschiedene Arten von Wobbelperioden umfaßt, mit den folgenden Schritten:

   - Transformieren der Frequenz und/oder Phase von oberschwingungsabweichungen in dem Wobbelsignal in Amplitudenabweichungen,
   - Detektieren der Amplitudenabweichungen und
   - Detektieren einer aktuellen Art von Wobbelperiode aus den detektierten Amplitudenabweichungen.

**2.** Verfahren nach Anspruch 1, ferner mit dem Schritt des Erhaltens von Informationen über die gerade verwendete Modulation aus den detektierten Wobbelperiodenarten.

**3.** Verfahren nach Anspruch 1 oder 2, wobei der Schritt des Transformierens der Frequenz und/oder Phase von Oberschwingungsabweichungen in dem Wobbelsignal in Amplitudenabweichungen umfaßt, das Wobbelsignal unter Verwendung einer dynamischen Integrierfunktion zu integrieren.

**4.** Verfahren nach Anspruch 3, ferner mit den folgenden Schritten:

- Speichern der Maximal- und/oder Minimalwerte des Integrals des Wobbel-Vorgangs in einer Wobbelperiode und
- Verwenden der gespeicherten Maximal- und/oder Minimalwerte als Anzeige der Wobbelperiodenart.

**5.** Verfahren nach Anspruch 4, ferner mit dem Schritt des Vergleichens der Maximal- und/oder Minimalwerte mit Wertebereichen für die verschiedenen Wobbelperiodenarten.

**6.** Verfahren nach einem der Ansprüche 1 bis 5, ferner mit dem Schritt des Detektierens mindestens einer der verschiedenen Wobbelperiodenarten durch Messen der Frequenz des Wobbelsignals.

**7.** Verfahren nach einem der Ansprüche 1 bis 6, ferner mit dem Schritt des Bestimmens der Reihenfolge von Maximal- und Minimalwerten zur Detektion der Wobbelperiodenart.

**8.** Verfahren nach einem der vorhergehenden Ansprüche, wobei es auf ein Wobbelsignal angewandt wird, daß durch Verwendung der Verfahren der Minimum-Umtastung (MSK) und der oberschwingungsmodulierten Welle (HMW) moduliert wird.

**9.** Einrichtung zum Demodulieren der ADIP-Daten eines Wobbelsignals eines optischen Aufzeichnungsmediums, wobei das Wobbelsignal verschiedene Arten von Wobbelperioden umfaßt, wobei sie ein Verfahren nach einem der Ansprüche 1 bis 8 ausführt.

**10.** Vorrichtung zum Lesen und/oder Beschreiben von Aufzeichnungsmedien, wobei sie ein Verfahren nach einem der Ansprüche 1 bis 8 anwendet oder eine Einrichtung nach Anspruch 9 zur Wobbeldemodulation umfaßt.

**Revendications**

**1.** Méthode de démodulation des données ADIP d'un signal ondulatoire associé à un support d'enregistrement optique, où le signal ondulatoire comprend différents types de périodes d'oscillement de piste, **comprenant** les étapes consistant à

- transformer la fréquence et/ou la phase des écarts harmoniques dans le signal ondulatoire en écarts d'amplitude ;
- détecter les écarts d'amplitude : et
- détecter un type courant de période d'oscillement de piste à partir des écarts d'amplitude détectés.

**2.** Méthode selon la revendication 1, comprenant **en outre** l'étape consistant à obtenir des informations sur la modulation utilisée à partir des types de période d'oscillement de piste.

**3.** Méthode selon la revendication 1 ou 2, où l'étape consistant à transformer en écarts d'amplitude la fréquence et/ou la phase des écarts harmoniques dans le signal ondulatoire comprend l'intégration du signal ondulatoire à partir d'une fonction intégrée dynamique.

**4.** Méthode selon la revendication 3, comprenant **en outre** les étapes consistant à :

- stocker la valeur maximale et/ou la valeur minimale de l'intégrale de l'oscillement de piste dans une période d'oscillement de piste ; et
- utiliser la valeur maximale et/ou la valeur minimale stockées comme indication du type de période d'oscillement de piste.

**5.** Méthode selon la revendication 4, comprenant **en outre** l'étape consistant à comparer les valeurs maximale et/ou minimale aux plages de valeurs associées aux différents types de période d'oscillement de piste.

**6.** Méthode selon une des revendications 1 à 5, comprenant **en outre** l'étape consistant à détecter au moins un des différents types de période d'oscillement de piste en mesurant la fréquence du signal d'oscillement de piste.

**7.** Méthode selon une des revendications 1 à 6, comprenant **en outre** l'étape consistant à déterminer l'ordre des valeurs maximale et minimale permettant de détecter le type de période d'oscillement de piste.

**8.** Méthode selon une des revendications précédentes, laquelle est appliquée à un signal ondulatoire qui est modulé à l'aide des méthodes de modulation par déplacement minimal (MSK) et/ou d'onde modulée harmonique (HMW).

**9.** Appareil de démodulation des données ADIP d'un signal ondulatoire associé à un support d'enregistrement optique, où le signal ondulatoire comprend différents types de périodes d'oscillement de piste, lequel appareil exécute une méthode selon une des revendications 1 à 8.

**10.** Appareil permettant de lire et/ou d'écrire sur des supports d'enregistrement, lequel appareil utilise une méthode selon une des revendications 1 à 8 ou comprend un appareil de démodulation de l'oscillement de piste selon la revendication 9.

a)

Monotone Wobble

b)

Integrated MW

**Fig. 1**

a)

b)

**Fig. 2**

a)

**Sawtooth wobble representing a "1"**

b)

**Integral of Sawtooth '1'**

**Fig. 3**

a)

Sawtooth wobble representing a "0"

b)

Integral of Sawtooth '0'

**Fig. 4**

**Fig. 5**